Europäisches Patentamt

European Patent Office

Office européen des brevets

(19)

(11) Veröffentlichungsnummer: **0 070 554 B1**

(12) **EUROPÄISCHE PATENTSCHRIFT**

(45) Veröffentlichungstag der Patentschrift:
14.05.86

(51) Int. Cl.⁴: **H 02 G 1/12**

(21) Anmeldenummer: **82106516.6**

(22) Anmeldetag: **19.07.82**

(54) **Handgerät zum Abschälen der äusseren Mantelschicht elektrischer Leitungen und elektrischer Kabel.**

(30) Priorität: **22.07.81 DE 3129014**
**19.04.82 DE 3214479**

(43) Veröffentlichungstag der Anmeldung:
**26.01.83 Patentblatt 83/4**

(45) Bekanntmachung des Hinweises auf die Patenterteilung:
**14.05.86 Patentblatt 86/20**

(84) Benannte Vertragsstaaten:
**FR GB**

(56) Entgegenhaltungen:
**CH - A - 196 056**
**DE - C - 152 887**
**DE - U - 7 510 408**
**US - A - 3 869 791**

(73) Patentinhaber: **Siemens Aktiengesellschaft, Berlin und München Wittelsbacherplatz 2, D-8000 München 2 (DE)**

(72) Erfinder: **Putz, Wilhelm, Nordring 31, D-8550 Kersbach (DE)**

ACTORUM AG

## Beschreibung

Die Erfindung bezieht sich auf ein handbetätigtes, mit einem Antriebsknebel versehenes Gerät zum Entfernen der äusseren Mantelschicht elektrischer Leitungen und Kabel gemäss dem Oberbegriff des Patentanspruches 1.

Zur Vermeidung von Glimmentladungen in Hochspannungskabelisolierungen aus Thermoplastwerkstoffen wird häufig als Aussenmantel eine leitfähige Schicht aufgebracht. Diese leitfähige Schicht muss an den Verbindungsstellen bzw. an den Anschlussenden restlos entfernt werden. Dabei soll eine möglichst gleichmässig glatte Oberfläche erzielt werden.

Mit den bisher bekannten handbetätigten Werkzeugen wird im allgemeinen in axialer Richtung gearbeitet. Es sind auch Geräte bekannt, mit denen die leitfähige Schicht wendelförmig am Mantelumfang abgeschält wird. Die mit diesen Geräten erzielbare Oberflächenqualität sowie ihre Handhabung sind noch sehr unzulänglich und verbesserungsbedürftig.

Aus der deutschen Gebrauchsmusterschrift DE-U- 7 510 408 ist ein Schälwerkzeug, insbesondere für kunststoffisolierte elektrische Kabel, bekannt, das aus einer Trägerscheibe mit einer an den jeweiligen Leiter- bzw. Kabeldurchmesser einstellbaren Führung und einem verstellbaren Schälmesser aufgebaut ist. Dabei besteht bereits die Führung aus drei auf einer Trägerscheibe befestigten, zentrisch zustellbaren Führungsbacken und ist auch das Schälmesser gegenüber der Trägerscheibe radial stufenlos zustellbar und justierbar ausgebildet. Bei diesem Schälwerkzeug sind einerseits Zentrier- bzw. Führungsbacken mit glatten, konkav ausgebildeten Laufflächen und andererseits eine Vorschubeinrichtung mit auf separaten Backen angeordneten Spitzgewinde vorgesehen.

Weiterhin ist aus der US-A-3 869 791 ein Schälwerkzeug bekannt, bei dem Führungsbacken mit glatter konkaver Lauffläche und Vorschubbacken mit sägezahnartigem Spitzgewinde hintereinander in der Trägerscheibe angeordnet sind. Mehrere Schneidemesser sind demgegenüber an der Trägerscheibe radial zustellbar befestigt.

Schliesslich ist aus der CH-A-196 056 ein Gerät der eingangsgenannten Art bekannt, bei dem auf einer Trägerscheibe drei radial zustellbare Führungsbacken angeordnet sind, von denen jede ein zusätzlich radial verschiebbares Schneidemesser trägt.

Beim Stand der Technik dient als Vorschubeinrichtung jeweils das Spitzgewinde, mit dem in die äussere Mantelschicht eingeschnitten wird. Das heisst aber im Anwendungsfall, dass durch die aggressive Wirkung der Gewindezähne die Leiter- bzw. Kabeloberfläche in jedem Fall beschädigt wird und bei Erreichen eines Anschlages kein kontinuierlicher Auslauf möglich ist.

Der Erfindung liegt die Aufgabe zugrunde, ein verbessertes Gerät der genannten Art zu entwickeln, mit dem es möglich ist, die graphithaltige Thermoplastschicht an der Manteloberfläche von Hochspannungskabeln in einem vorgegebenen Bereich derart zu entfernen, dass die in diesem Bereich notwendige Oberfläche weitestgehend eben und insbesondere frei von axial verlaufenden Riefen ist, um ein hohlraumfreies Anfügen der Muffe zu ermöglichen.

Die Aufgabe ist erfindungsgemäss durch die im Kennzeichen des Patentanspruches 1 angegebenen Merkmale gelöst.

Mit der Erfindung ist ein Gerät geschaffen, mit dem in erwünschter Weise die äusseren Schichten von Leitungen bzw. Kabel definiert entfernt werden können. Das stumpfe Gewinde dient nicht wie beim Stand der Technik zum aggressiven Einschneiden in die Leiteroberflächen, sondern lediglich als Widerlager für den Vorschub des handbetätigbaren Gerätes. Bei Erreichen eines Anschlages kann demzufolge das eigentliche Kabel ohne Beschädigung durchrutschen, wobei gleichermassen ein auslaufender Schälspan erzeugt wird. Das einzige Schälmesser gewährleistet nach einmaliger Justierung eine gleichmässige Schältiefe auch bei sich veränderndem Kabeldurchmesser.

In Weiterbildung der Erfindung kann eine Führungsbacke in radialer Richtung federnd gelagert sein. Damit können Abweichungen des Kabelumfanges von der Kreisform ausgeglichen und somit der Schälvorgang verbessert werden.

Das Schälmesser kann auf einem durch eine Rändelschraube radial verschiebbaren Schälmesserträger angeordnet sein, der zweckmässigerweise mittels eines Klemmhebels justiert ist. Die Verstellscheibe ist dabei mittels eines zweiten Klemmhebels feststellbar.

Ausführungsbeispiele der Erfindung werden anhand der Zeichnung näher erläutert. Es zeigen:

Fig. 1 ein elektrisches Hochspannungskabel,

Fig. 2 und 3 in perspektivischer Darstellung eine Vorderansicht und eine Rückansicht des Gerätes gemäss der Erfindung,

Fig. 4 in perspektivischer Darstellung eine modifizierte Führungsbacke,

Fig. 5 und 6 zwei senkrecht zueinander stehende Schnitte durch Fig. 4, die unterschiedliche Lagermöglichkeiten der Führungsbacke zeigen.

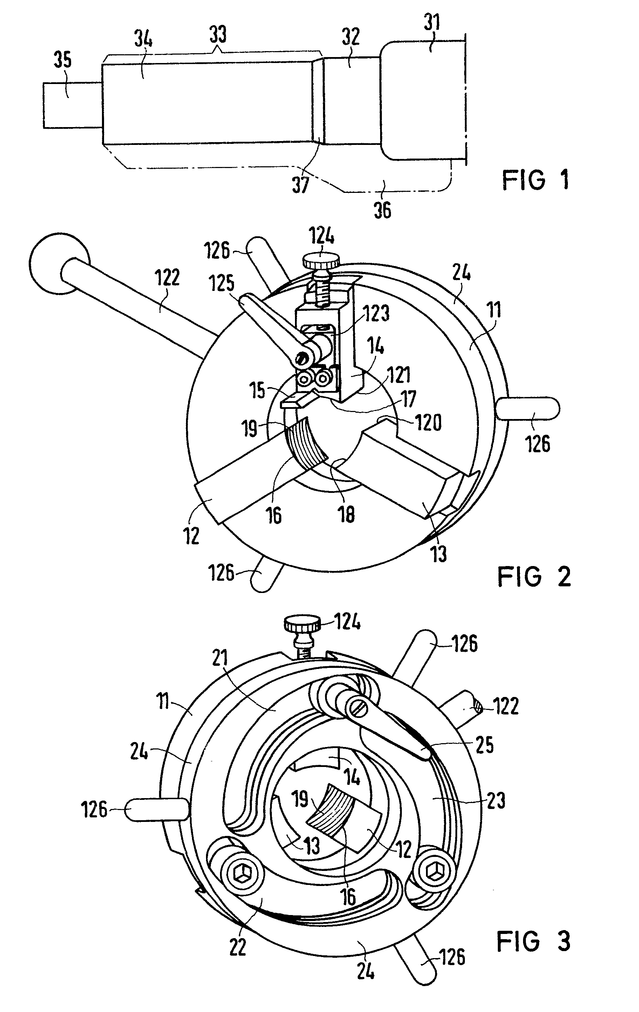

Fig. 1 zeigt im Schnitt ein elektrisches Hochspannungskabel. Mit 31 ist ein Drahtgeflecht als Abschirmung, mit 32 eine Leitschicht, mit 33 die Länge der entfernten Leitschicht, mit 34 eine Isolierung, mit 35 der eigentliche Leiter und mit 36 eine aufgesetzte Silikongummimuffe bezeichnet.

Gemäss den Fig. 2 und 3 ist das Gerät zur Entfernung der äusseren Mantelschicht des Kabels nach Fig. 1 besonders kompakt und leicht aufgebaut. Auf der Backenträgerscheibe 11 sind drei zentrisch zustellbare Führungsbacken 12, 13, 14 befestigt.

Die Führungsbacken 12, 13, 14 sind in der Bautiefe sehr kurz, z. B. etwa 20 mm. Die Führungsbacken sind an ihren Führungsflächen 16, 17, 18 konkav gewölbt, so dass eine möglichst gute Führung am Mantel des Leiters erreicht wird. Die Zustellung der Führungsbacken 12, 13, 14 auf den Manteldurchmesser des Leiters erfolgt mittels einer gegen die Backenträgerscheibe 11 drehbaren Verstellscheibe 24, die drei Spiralnuten 21, 22, 23 aufweist. An der Führungsbacke 14 ist der Schälmesserträger 123 mit dem Schälmesser 15 direkt befestigt.

Wegen der durch diese Bauart möglichen, verhältnismässig geringen Bautiefe kann mit dem in Fig. 2 und 3 dargestellten Gerät bis 20 mm an den Rand der über der Leitschicht 32 liegenden Drahtgeflechtabschirmung 31 nach Fig. 1 abgeschält werden, was eine Verringerung der gesamten Baulänge der Garnitur zulässt. In die konkaven Führungsflächen 16, 17, 18 der Führungsbacken 12, 13, 14 ist ein stumpfes Gewinde 19, 120, 121, z.B. ein Trapezgewinde, für den Vorschub eingearbeitet. Das Gewinde ist so ausgelegt, dass durch dessen Steigung ein zuverlässiger Vorschub in Richtung der Kabelachse gewährleistet ist, ohne die Oberfläche der leitfähigen Schicht 32 des Kabels zu verletzen. Der Vorschubweg pro Umdrehung ist auf die als günstig ermittelte Spanbreite abgestimmt, d.h. es wird bei jeder Umdrehung die volle Spanleistung genutzt. Dadurch, dass die Führungsflächen 16, 17, 18 den Vorschub bewirken, kann die Länge des Gerätes gering gehalten werden. Durch die erzwungene Vorschubbewegung wird während der Bearbeitung ein Kraftaufwand in axialer Richtung unnötig, d.h. die Handhabung erleichtert. Beim Zusammenfahren der Führungsbacken 12, 13, 14 auf Leiterdurchmesser wird gleichzeitig das Schälmesser 15 in die Arbeitsstellung gebracht.

Das Schälmesser 15 selbst ist auf der Backe 14 radial stufenlos verstellbar und zur Einstellung der Schältiefe justierbar. Das Schälmesser 15 wird durch radiales Verschieben des Schälmesserträgers 123 verstellt. Mittels des Kelmmhebels 125 ist der Schälmesserträger 123 feststellbar. Durch die Rändelschraube 124 wird die Spantiefe nur einmal eingestellt und wird mit dem Klemmhebel 125 festgeklemmt. Als günstigste Ausbildung der Schneide des Schälmessers 15 wurde ein Schnittwinkel von 30 bis 45° ermittelt. Die Schneide ist zum Schälrand hin schräg angeschliffen, so dass sich am Übergang von Leitschichtoberfläche 32 zur freigelegten Oberfläche 33 beim Kabel nach Fig. 1 ein Winkel von nur etwa 15° ergibt. Dieser kleine Winkel ist notwendig für ein hohlraumfreies Anlegen der Überzugsmuffe 36.

Zweckmässigerweise ist das Schälmesser 15 so angeordnet, dass die Schneidenspitze 1 bis 2 mm bei einem Durchmesserbereich von 15 bis 45 mm gegenüber dem tangentialen Berührungspunkt am Umfang voreilend schneidet. Dadurch wird bewirkt, dass das Schälmesser 15 leicht drückt und sich selbst auf der neu entstandenen Oberfläche abstützt. Durch diese Schnittdaten wird eine besonders gleichmässige glatte Oberfläche erzielt. Die dabei auftretenden Schnittkräfte sind so gering, dass das Werkzeug mit einem Finger gedreht werden kann. Das Drehen des Werkzeuges erfolgt mittels des Antriebsknebels 122. Die Stifte 126 dienen zum Verstellen der Verstellscheibe 24.

Ein bezüglich elektrischer Festigkeit besonders kritischer Bereich eines Hochspannungskabels ist die Übergangszone 37 von der freigelegten Oberfläche 33 zu der Schicht 32 (Fig. 1). In diesem Bereich soll die leitfähige Schicht möglichst wenig ausgefranst sein und auf einer axialen Länge von etwa 2 bis 3 mm in einem sanften Übergang von etwa 15° schräg auslaufen.

Diese vorgenannten Forderungen können mit bisher bekannten Werkzeugen und Geräten nicht erreicht werden, da bei diesen die Schneidengeometrie nicht optimal ausgebildet ist. Der Schnittwinkel ist zu klein, so dass die Werkzeugschneide zu aggressiv arbeitet, wodurch eine faserige Oberfläche entsteht. Weiterhin ist die Anstellung der Schneide praktisch nicht reproduzierbar, da bei jeder Umstellung auf einen anderen Werkstückdurchmesser eine Neueinstellung des Messers notwendig ist.

Zum Bearbeiten des Werkstückes wird das anhand der Fig. 2 und 3 beschriebene Gerät wie eine Gewindeschneidkluppe mit der Verstellscheibe 24 in Bearbeitungsrichtung an das Kabel angesetzt und mittels des Antriebsknebels 122 rechtsgängig gedreht. Die Verstellscheibe 24 wird mittels des Klemmhebels 25 festgestellt. Um bei der Übergangszone leitfähige Schicht/freigelegte Oberfläche einen nicht ausgefransten Rand zu erhalten, wird das Gerät gegen einen festen Anschlag geführt. Hierbei rutscht der Vorschub durch und der Span läuft aus.

Es kann sich insbesondere bei grösseren Kabeldurchmessern als zweckmässig erweisen, mindestens eine der Führungsbacken in radialer Richtung federnd zulagern, um Abweichungen des Kabelumfanges von der Kreisform auszugleichen und so den Schälvorgang zu verbessern.

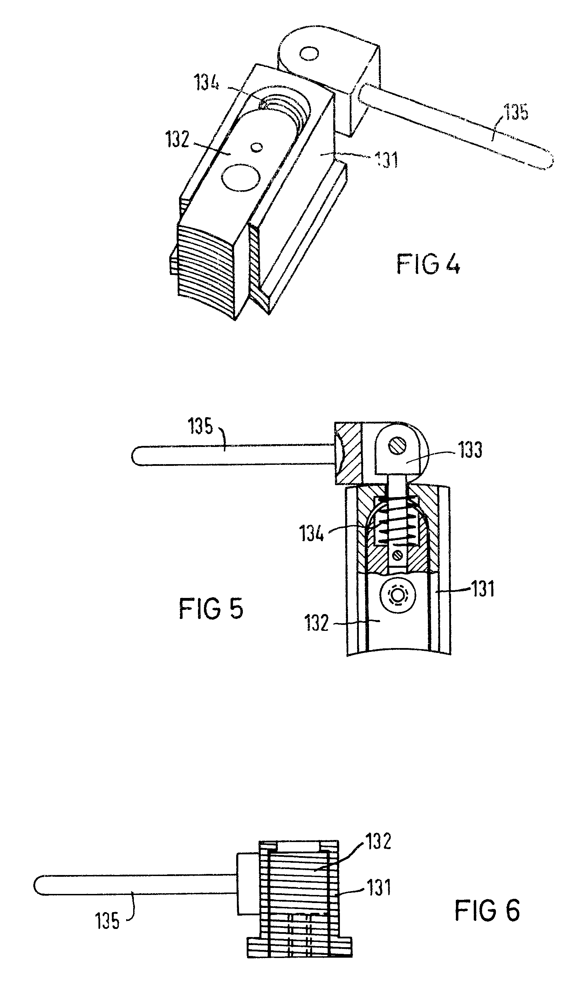

In Fig. 4 bis 6 ist hierzu die Führungsbacke 132 in eine in Längsrichtung eines Halteklotzes 131 verlaufende Nut eingebracht, wobei der Halteklotz 131 seinerseits in radial verlaufenden Nuten der Trägerscheibe 11 geführt ist und in dieser Radialnut durch Betätigung des Klemmhebels 25 fixiert werden kann. Letzteres entspricht der Fixierung der Führungsbacke 13 in Fig. 2 und 3.

Beim Schälvorgang auftretende axiale Kräfte können besser und gleichmässiger aufgenommen werden, wenn die die Führungsbacken aufnehmenden Radialnuten der Trägerscheibe 11 sich zum Nutgrund hin erweitern, also z.B. schwalbenschwanz- oder T-förmig sind. Einer solchen Ausführungsform entsprechend ist der in der Fig. 4 dargestellte Halteklotz mit seinen in die Radialnut einzubringenden Teil ausgebildet. Der Halteklotz 131 weist eine in seiner Längsrichtung verlaufende Nut auf, in welcher die Führungsbacke 132 radial verschiebbar ist. Ein Zugbolzen 133 ist mit der Führungsbacke 132 verstiftet und gestattet, diese entgegen der Kraft einer Druckfeder 134 zu bewegen, welche sich an ihren Enden gegen den Halteklotz 131 und am Grunde einer in der Führungsbacke 132 verlaufenden Bohrung abstützt. An dem Zugbolzen 133 ist ein Exzenterhebel 135 angelenkt.

Wenn die Führungsbacken auf ein Kabel zugestellt werden sollen, befindet sich der Exzenterhebel in der in Fig. 5 dargestellten Stellung, bei welcher die Führungsbacke 132 am weitesten in die Nut des Halteklotzes 131 zurückgezogen ist. Nach erfolgter Zustellung wird dann der Exzenterhebel umgelegt und es drückt nunmehr die Kraft der Feder die Führungsbacke gegen den Kabelmantel, so dass diese seinem gegebenenfalls unrundem Lauf zu folgen vermag und stets eine sichere Führung des Kabelmantels gewährleistet ist.

Fig. 6 zeigt eine Ausbildung der die in radialer Richtung federnd gelagerte Führungsbacke ausnehmenden Nut des Halteklotzes 131, mit welcher in axialer Richtung auftretende Kräfte vom Halteklotz aufgenommen werden können. Diese Nut ist nicht, wie in den Fig. 4 und 5 dargestellt, nach oben offen, sondern umgreift oben die Führungsbacke 132. Sollte aus fertigungstechnischen Gründen ein kreisförmiger Nutquerschnitt in Frage kommen, dann müsste die maximale Nuttiefe grösser als der Kreishalbmesser bemessen werden, damit auch bei dieser Nutgestaltung der Halteklotz axialer Kräfte aufnehmen kann.

**Patentansprüche**

1. Handbetätigtes, mit einem Antriebsknebel versehenes Gerät zum Entfernen der äusseren Mantelschicht elektrischer Leitungen und Kabel, mit einer auf den jeweiligen Leitungs- oder Kabeldurchmesser einstellbaren Führungseinrichtung, die drei an einer Trägerscheibe (11) befestigte, bezüglich der Längsachse der Leitung oder des Kabels radial und stufenlos zustellbare Führungsbacken (12–14, 132) aufweist, die konkave, sich der Leitungs- bzw. Kabelrundung anpassende Führungsflächen (16–18) haben, die mittels einer mit Spiralnuten (21–23) versehenen Stellscheibe (24) auf den jeweiligen Leitungs- bzw. Kabeldurchmesser einstellbar sind und von denen mindestens eine als Messerträger ausgebildet ist, dadurch gekennzeichnet, dass bei Ausbildung des Gerätes als Schälwerkzeug nur eine der Führungsbacken (14) ein Messer trägt, dass dieses Messer als Schälmesser (15) ausgebildet ist, dass die Führungsbacken (12–14, 132) einstückig sind und die daran ausgebildeten Führungsflächen (16–18) eine gewindeartig strukturierte Oberfläche (19, 120, 121) haben, die bei Drehung des Gerätes um das Schälgut eine fortschreitende Bewegung des Gerätes in Längsrichtung des Schälgutes bewirkt, und dass die Zähne dieses Gewindes (19, 120, 121) hinreichend stumpf sind, dass sie die Oberfläche der abzuschälenden Mantelschicht nicht verletzen.

2. Gerät nach Anspruch 1, dadurch gekennzeichnet, dass mindestens eine Führungsbacke (132) in radialer Richtung federnd gelagert ist.

3. Gerät nach Anspruch 2, dadurch gekennzeichnet, dass die federnd gelagerte Führungsbacke (132) radial beweglich in die Nut eines auf der Trägerscheibe (11) fixierbaren Halteklotzes (131) eingebracht ist und sich über eine Druckfeder (134) gegen diesen abstützt.

4. Gerät nach Anspruch 3, dadurch gekennzeichnet, dass die Führungsbacke (132) mittels eines an einem Exzenterhebel (135) angelenkten Bolzens (133) bewegbar ist.

5. Gerät nach einem der Ansprüche 1 bis 4, dadurch gekennzeichnet, dass die Trägerscheibe (11) radial verlaufende T- oder schwalbenschwanzförmige Nuten zur Aufnahme der Führungsbacken (12, 13, 19, 132) bzw. der Halteklötze (131) aufweist.

6. Gerät nach Anspruch 3, gekennzeichnet durch eine die Führungsbacke (132) zumindest teilweise umgreifende Nut des Halteklotzes (131).

7. Gerät nach Anspruch 1, dadurch gekennzeichnet, dass das Schälmesser (15) auf einem durch eine Rändelschraube (124) radial verschiebbaren Schälmesserträger (123) angeordnet ist.

8. Gerät nach Anspruch 9, dadurch gekennzeichnet, dass der Schälmesserträger (123) mittels eines Klemmhebels (125) justierbar ist.

9. Gerät nach Anspruch 7, dadurch gekennzeichnet, dass der Schnittwinkel des Schälmessers (15) 30° bis 45° beträgt.

10. Gerät nach Anspruch 9, dadurch gekennzeichnet, dass an ihrem der Trägerscheibe (11) zugekehrten Rand die Schneide des Schälmessers (15) schräg zu ihrer Längsachse angeschliffen ist.

11. Gerät nach einem der vorhergehenden Ansprüche, dadurch gekennzeichnet, dass die Trägerscheibe (11) mittels eines Klemmhebels (25) an der Verstellscheibe (24) feststellbar ist.

**Claims**

1. A hand-tool, provided with an operating crossbar, for removing the outer sheath layer of electric leads and cables, comprising a guide device which is adjustable to the respective diameter of the lead or cable and which has three guide jaws (12–14, 132) which are secured to a carrier disc (11) and can be radially and continuously closed with respect to the longitudinal axis of the lead or cable, and which have concave guide surfaces (16–18) which are adapted to the curvature of the lead or cable and which can be adjusted to the respective diameter of the lead or cable by means of a setting disc (24) provided with spiral grooves (21–23), and at least one of which guide surfaces is formed as a knife carrier, characterised in that, if the tool is designed to act as a paring tool, only one of the guide jaws (14) carries a knife; that said knife is designed as a paring knife (15); that the guide jaws (12–14, 132) are in one piece and the guide surfaces (16–18) formed thereon have a threadedly structured surface (19, 120, 121) which, when the implement rotates around the product to be pared, effects a progressive movement of the implement in the longitudinal direction of the product to be pared; and that the teeth of said thread (19, 120, 121) are sufficiently blunt as not to impair the surface of the sheath layer which is to be removed.

2. A tool as claimed in Claim 1, characterised in that at least one of the guide jaws (132) is resiliently mounted in the radial direction.

3. A tool as claimed in Claim 2, characterised in that the resiliently-mounted guide jaw (132) is inserted into the groove of a holding block (131), which can be fixed to the carrier disc (11), so as to be radially movable and is supported thereon by means of a pressure spring (134).

4. A tool as claimed in Claim 3, characterised in that the guide jaw (132) is movable by means of a bolt (133) which is articulated to an eccentric lever (135).

5. A tool as claimed in one of Claims 1 to 4, characterised in that the carrier disc (11) has radial T-shaped or dovetail grooves for accommodating the guide jaws (12, 13, 19, 132) and the holding blocks (131).

6. A tool as claimed in Claim 3, characterised by a groove of the holding block (131) which at least partially surrounds the guide jaw (132).

7. A tool as claimed in Claim 1, characterised in that the paring knife (15) is arranged on a paring knife carrier (123) which is radially displaceable by a knurled-headed screw (124).

8. A tool as claimed in Claim 9, characterised in that the paring knife carrier (123) is adjustable by means of a clamping lever (125).

9. A tool as claimed in Claim 7, characterised in that the cutting angle of the paring knife (15) is 30° to 45°.

10. A tool as claimed in Claim 9, characterised in that on its edge facing the carrier disc (11), the cutting edge of the paring knife (15) is sharpened obliquely to its longitudinal axis.

11. A tool as claimed in one of the preceding Claims, characterised in that the carrier disc (11) can be fixed on the adjusting disc (24) by means of a clamping lever (25).

## Revendications

1. Appareil à commande manuelle, pourvu d'une manette d'entraînement, pour enlever la couche d'enveloppe extérieure de conducteurs et câbles électriques, comprenant un dispositif de guidage réglable sur le diamètre du conducteur ou du câble à traiter, qui présente trois pièces de guidage (12–14, 132) fixées à un disque support (11), pouvant être approchées et écartées de façon continue dans le sens radial par rapport à l'axe longitudinal du conducteur ou du câble, qui présentent des surfaces de guidage (16–18) concaves s'adaptant à l'arrondi du conducteur ou du câble, qui peuvent être réglées sur le diamètre du conducteur ou du câble à traiter, au moyen d'un disque de réglage (24) pourvu de rainures en spirale (21–23) et dont l'une au moins est réalisée comme un support de couteau, caractérisé en ce que, en cas de réalisation de l'appareil comme un outil à peler, l'une seulement des pièces de guidage (14) porte un couteau, que ce couteau est réalisé comme un couteau à peler (15), que les pièces de guidage (12–14, 132) sont d'un seul tenant et les faces de guidage (16–18) formées sur elles possèdent une surface structurée à la façon d'un filet (19, 120, 121), laquelle, lors de la rotation de l'appareil autour de l'objet à peler, produit un mouvement d'avance de l'appareil dans le sens de la longueur de l'objet à peler, et que les dents de ce filet (19, 120, 121), sont suffisamment obtues pour qu'elles ne blessent pas la surface de la couche d'enveloppe à enlever par pelage.

2. Appareil selon la revendication 1, caractérisé en ce qu'une pièce de guidage (132) au moins est montée élastiquement dans le sens radial.

3. Appareil selon la revendication 2, caractérisé en ce que la pièce de guidage (132) montée élastiquement est disposée radialement mobile dans la rainure d'une pièce de maintien (132) pouvant être fixée sur le disque support (11) et sur laquelle la pièce de guidage s'appuie par l'intermédiaire d'un ressort de compression (134).

4. Appareil selon la revendication 3, caractérisé en ce que la pièce de guidage (132) est déplaçable au moyen d'un tirant (133) articulé sur un levier excentré (135).

5. Appareil selon une des revendications 1 à 4, caractérisé en ce que le disque support (11) présente des rainures en T ou en queue d'aronde orientées radialement et destinées à recevoir les pièces de guidage (12, 13, 19, 132) respectivement les pièces de maintien (131).

6. Appareil selon la revendication 3, caractérisé en ce que la pièce de maintien (131) présente une rainure dont les flancs entourent la pièce de guidage (132) au moins partiellement.

7. Appareil selon la revendication 1, catactérisé en ce que le couteau à peler (15) est disposé sur un support de couteau (123) qui est déplaçable radialement par une vis moletée (124).

8. Appareil selon la revendication 9, caractérisé en ce que le support (123) du couteau est ajustable au moyen d'un levier de serrage (125).

9. Appareil selon la revendication 7, caractérisé en ce que l'angle de coupe du couteau (15) est de 30° à 45°.

10. Appareil selon la revendication 9, caractérisé en ce que le tranchant du couteau (15) est affûté obliquement par rapport à son axe longitudinal sur son côté dirigé vers le disque support (11).

11. Appareil selon une des revendications précédentes, caractérisé en ce que le disque support (11) peut être bloqué sur le disque de réglage (24) au moyen d'un levier de serrage (25).

FIG 1

FIG 2

FIG 3

FIG 4

FIG 5

FIG 6